(19) Europäisches Patentamt

European Patent Office

Office européen des brevets

(11) **EP 4 543 105 A1**

(12) **EUROPEAN PATENT APPLICATION**

(43) Date of publication:
**23.04.2025 Bulletin 2025/17**

(21) Application number: **23203850.5**

(22) Date of filing: **16.10.2023**

(51) International Patent Classification (IPC):
*H04W 56/00* *(2009.01)*

(52) Cooperative Patent Classification (CPC):
**H04W 56/002**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Rohde & Schwarz GmbH & Co. KG
81671 München (DE)**

(72) Inventor: **Haas, Erik
81671 München (DE)**

(74) Representative: **Prinz & Partner mbB
Patent- und Rechtsanwälte
Rundfunkplatz 2
80335 München (DE)**

(54) **METHOD OF SYNCHRONIZING PARTICIPANTS OF A COMMUNICATION NETWORK AND COMMUNICATION NETWORK**

(57)    The invention relates to a method of synchronizing participants (12) of a communication network (10) without using a global time source. The method comprises the steps of:

- Transmitting a message at the beginning of a time frame of a first frame structure,
- Receiving at a receiving time the message transmitted by the first participant (14),
- Transmitting a response message to the first participant (14) at the beginning of a time frame of a second frame structure, wherein the response message comprises information associated with the receiving time,
- Receiving the response message at a response time,
- Determining a time delay based on the response time and the information comprised in the response message, and
- Transmitting a feedback message to the second participant (16), wherein the feedback message comprises information associated with the time delay determined.

Further, a communication network (10) is described.

Fig. 3

**Description**

The invention relates to a method of synchronizing participants of a communication network without using a global time source. Further, the invention relates to a communication network without global time source.

Communication among participants of a communication network usually requires a time synchronization of the respective participants such that the communication is not interfered or disturbed due to simultaneous signal transmissions, namely collisions.

In the state of the art, communication networks are known that rely on a global time source, for instance an atomic clock or a clock signal received via from a global navigation satellite system (GNSS) device. The global time source provides a global time to be distributed in the communication network in order to ensure that all participants of the communication network communicate with each other based on the global time.

Specifically, the communication network may comprise a central base station that receives or provides the global time while coordinating the participants of the communication network accordingly. The central base station relates to an infrastructure of the communication network. Additionally, communication networks are also known which do not comprise such a central base station. Hence, these communication networks do not have a respective infrastructure, but each of the participants may coordinate the distribution of the global time within the communication network.

Typically, the global time source is required by the communication networks known so far which makes the entire communication network more prone to failure due to a single point of failure, e.g. disturbed GNSS reception, defect of the atomic clock, defect of the coordinating participant, or defect of a time master used for distributing the global time.

Accordingly, there is a need for a method and a communication network that is more robust against these circumstances.

The invention provides a method of synchronizing participants of a communication network without using a global time source. The communication network comprises at least a first participant as well as a second participant. The first participant has an initial first system time. The second participant has an initial second system time. The method comprises the steps of:

- Transmitting, by the first participant, a message at the beginning of a time frame of a first frame structure,

- Receiving at a receiving time, by the second participant, the message transmitted by the first participant,

- Transmitting, by the second participant, a response message to the first participant at the beginning of a time frame of a second frame structure, wherein the response message comprises information associated with the receiving time,

- Receiving, via the first participant, the response message at a response time,

- Determining, via the first participant, a time delay based on the response time and the information comprised in the response message, and

- Transmitting, via the first participant, a feedback message to the second participant, wherein the feedback message comprises information associated with the time delay determined.

The main idea of the invention is to synchronize the participants of the communication network without using a global time (source), e.g. a source that provides a global time to be distributed within the communication network, namely among the participants of the communication network. Actually, the participants, e.g. the first participant and the second participant, communicate with each other, wherein temporal information is exchanged such that the participants communicating with each other are enabled to synchronize themselves. In other words, (only) a synchronization of the respective participants is achieved that communicate with each other. This specific synchronization may not affect other participants of the communication network, which are not involved in the respective communication between the first participant and the second participant. To the contrary, other communication partners may exist that are synchronized with each other, but their temporal synchronization differs from the synchronization of the first participant and the second participant even though all of these participants are part of the same communication network. Consequently, no (global or standard) network time exists to which all participants of the communication network have to be synchronized.

Put differently, the participants of the communication network may establish sub-networks, wherein the respective participants of the sub-networks are synchronized with each other, but it is not necessary that all participants or rather the respective sub-networks are synchronized with each other.

Generally, an initial synchronization between the first participant and the second participant is achieved, e.g. a synchronization between the first participant and the second participant, which occurs for the first time. Hence, either the first participant or the second participant may relate to a new participant in the communication network. Put differently, the first participant and the second participant may not have communicated with each other previously.

The time delay may comprise internal time delays of the participants, e.g. an internal oscillator, and/or an external time delay due to a signal runtime that is caused by the distance between the participants.

The participants may be located at different positions such that an external time delay occurs. Actually, a wired or wireless communication may be established.

For instance, the participants communicate with each other over-the-air (OTA) such that a respective communication link is a wireless one. In other words, a transmission medium may relate to air.

The participants may be transceivers that are configured to transmit signals and to receive signals, particularly over-the-air (OTA). For instance, the participants are radios. From a network perspective, the participants may relate to nodes in the communication network.

In addition, the participants may be stationary participants or mobile participants, particularly in a three-dimensional space. Therefore, it is possible that the distance between the participants may differ during operation of the communication network, causing different runtimes of signals/messages exchanged during operation due to the varying distance between the participants.

Therefore, the steps mentioned above may be repeated (continuously). The continuous repetition ensures that more data is gathered such that mean values can be determined, based on which the synchronization is done. Consequently, it is possible to take deviations into account.

Accordingly, the respective runtime of the signals transmitted into account when synchronizing the participants.

The communication network may be a mobile ad-hoc network (MANET) or a multi-hop network.

The information associated with the receiving time may relate to an initial time delay which is assumed to occur. In other words, the information, for instance the initial time delay, may be derived from receiving time. The initial time delay however may be set to zero in the initial phase, e.g. handshake phase, of the communication between the first participant and the second participant. The initial phase, also called handshake phase, may relate to the transmission and reception of the (initial) message.

Accordingly, the first participant and the second participant are associated with the first frame structure and the second frame structure, respectively. In other words, the first participant is embedded in a first frame structure within the communication network, whereas the second participant is embedded in a second frame structure within the communication network.

Generally, the first participant or the second participant is embedded in a respective frame structure within the communication network. This means that at least the transmission of signals/messages is done in accordance with the underlying frame structure. As usual, a time frame can be considered as a Time Division Multiple Access (TDMA) time division unit.

The information associated with the receiving time and/or the information associated with the time delay determined relate to time stamps that are exchanged.

An aspect provides that, in case the second participant is a new participant in the communication network, the second participant resets the initial second system time with respect to the receiving time, thereby initially assuming that no time delay occurs in the communication between the first participant and the second participant. Accordingly, no virtual clock or virtual time is used for synchronizing the participants, but the initial system time of the second participant is set to the receiving time at which the second participant receives the message transmitted by the first participant. Due to the resetting of the initial second system time, namely the initial system time of the second participant, it is initially assumed that no time delay, e.g. due to a runtime caused by a distance between the participants, is present. The receiving time, to which the initial second system time is reset, corresponds to the sum of the initial first system time and the (unknown) runtime of the signal/message. In other words, an initial delay time of zero is assumed initially.

This initial assumption is revised afterwards when determining the time delay. In fact, the response message is received at the response time by the first participant, wherein the response time corresponds to the sum of the (reset) initial second system time and the (unknown) runtime of the signal/message subtracted by the initial first system time. Since the response message comprises the information associated with the receiving time, e.g. the initial time delay (which is assumed to be zero). Based thereon, namely the initial time delay and the response time, the time delay is determined, for instance by subtracting the initial time delay (which is assumed to be zero) from the response time. In other words, the time delay determined corresponds to the response time at this stage.

Afterwards, the feedback message is sent by the first participant, which comprises the time delay determined. The feedback message is received by the second participant at a feedback time.

Another aspect provides that the second participant adapts its system time based on the feedback message received such that the system time of the second participant corresponds to the initial first system time. The second participant adapts its own system time to the one of the first participant, thereby ensuring that both participants have the same system time, e.g. a network time used by the first participant and the second participant. Once the system time has been adapted to the system time of the other participant, both participants are initially synchronized in time with respect to each other. The initial synchronization is achieved accordingly. As mentioned above, the system time may be adapted after the initial system time has been reset previously.

In other words, a network time of the participants communicating with each other is obtained after the initial synchronization. Since the first participant and the second participant are synchronized with each other, their system times relate to the network time. Specifically, the second participant adapts its own system time to the system time of the first participant, namely the initial first system time, such that the network time obtained relates to the initial first system time.

Again, no virtual clock is required, as the network time for the participants communicating with each other is directly adapted, which is used for the communication between the first participant and the second participant.

Particularly, the time delay determined is taken into account when adapting the system time of the second participant. The time delay determined may be transmitted by the feedback message such that the feedback time and the time delay determined may be processed for adapting the system time of the second participant.

A further aspect provides that a correction time is determined based on the feedback message received at a feedback time, wherein the correction time is half of the difference of the time delay and the feedback time. Particularly, the system time of the second participant is adapted based on the correction time. The correction time is associated with the runtime of the signal between the first participant and the second participant.

In fact, the time delay determined relates to the runtime of the signal in both directions, namely from the first participant to the second participant as well as from the second participant to the first participant. In other words, the runtime caused by the distance is included twice in the time delay determined. Therefore, the time delay determined is divided by two in order to obtain the correction time.

Besides the system time of the second participant, the runtime itself is determined based on the correction time. Particularly, the runtime, namely the time required for the signal/message to be transmitted over the transmission channel between the first participant and the second participant, is defined by the feedback time of the feedback message and the correction time, particularly the sum of the feedback time and the correction time.

Generally, internal clock drifts and/or jitter of each participant are also considered (besides the runtime or distance of the participants communicating with each other). Therefore, external time delays, e.g. due to a distance between the participants, as well as internal time delays, e.g. due to clock drifts and/or jitter, are compensated accordingly.

In other words, an absolute time delay is compensated in an appropriate manner, particularly continuously.

The respective message may correspond to a blip, a hello message or a timing information. The timing information may be provided by a management packet, for instance header information or similar.

The respective initial system times of the participants may not be synchronous prior to processing the information associated with the time delay determined. As mentioned above, the initial system times do not have to be synchronous from the beginning, but they may be synchronous unintentionally. In any case, the method allows for an initial synchronization of the system times such that the system times are synchronized with each other after performing the respective steps.

A further aspect provides that, during a regular operation and after an initial synchronization, a certain participant transmits a message that is received by the other participant with a temporal delay. The other participant determines the temporal delay. The other participant transmits a message comprising information associated with the temporal delay. The certain participant receives the message and adapts its system time based on the information associated with the temporal delay. Hence, a further synchronization may also take place after the initial synchronization mentioned above. The further synchronization, which is done during the regular operation and after the initial synchronization, is typically used for compensating clock drifts of the respective participants.

Moreover, the respective steps mentioned above, which take place during a regular operation and after the initial synchronization, may also be done in case a communication between the respective participants, namely the certain participant and the other participant, has not been performed for a long time. However, these participants have been synchronized with each other before, but the former synchronization, namely the initial synchronization, is not valid anymore due to the long pause.

Actually, the first participant may be the certain participant or the other participant. Further, the second participant may be the certain participant or the other participant.

For instance, the initial first system time and the initial second system time differ from each other. Alternatively or additionally, the first frame structure and the second frame structure differ from each other. Consequently, the participants may not be synchronized when starting the (initial) synchronization. Usually, the participants are not synchronized with each other from the beginning. However, the participants may be synchronized by chance.

A further aspect provides that the second frame structure is adapted to the first frame structure based on the feedback message received. Once the system time of the second participant is adapted, the respective frame structure may also be adapted in case both frame structures differ from each other initially. This ensures that the communication between the participants can be performed in a synchronized manner.

The communication network may comprise more than two participants. Particularly, only the communication between 1-hop neighbors of the communication network is synchronized. Thus, it is not necessary that a network time is distributed within the entire communication network. To the contrary, only 1-hop neighbors of the communication network are synchronized with each other with regard to their system times, namely those participants that communicate with each other. Again, a virtual time or a virtual clock is not used, as the respective network time of the participants are used for synchronizing direct communication partners.

The several participants may communicate on the same transmission channel or via the same transmission medium with each other.

Moreover, a periodic synchronization, for instance each 1 s, is performed. Consequently, the certain participant may transmit the message to its direct neighbors in the communication network periodically, particularly in a specific order. The periodic synchronization may be done within the communication network in the same order or rather in a random order.

As discussed above, a global time is not distributed among the participants within the communication network. In fact, only direct communication partners synchronize themselves with regard to their system times such that these communication partners share a common network time. However, other participants of the network may have a synchronized communication that is based on a network time different to the one of the first participant and the second participant.

Another aspect provides that each of the participants has an own frame structure. Therefore, different frame structures may be used by the different participants - at least at the beginning.

Particularly, the respective frame structures of the participants relate to different kinds of frame structures. Therefore, it is not necessary that the participants communicating with each other relate to the same kind of frame structure. For instance, a global navigation satellite system (GNSS) frame structure and a different frame structure may be used by the participants initially. As discussed above, the frame structure(s) may also be adapted such that both participants are communicating with each other after synchronization while using a similar frame structure.

Moreover, an initialization phase is initiated during which the first participant transmits the message at the beginning of the time frame in a periodic manner in order to receive the response message. In other words, the first participant is listening to a response from participants of the communication network, particularly any other participant of the communication network.

Alternatively, it is the certain participant that initiates the initialization phase during which the certain participant transmits the message at the beginning of its time frame in a periodic manner in order to receive a response from participants of the communication network.

Furthermore, the invention provides a communication network without global time source. The communication network comprises a first participant having an initial first system time. The communication network further comprises a second participant having an initial second system time. The first participant is configured to transmit a message at the beginning of a time frame of a first frame structure. The second participant is configured to receive at a receiving time the message transmitted by the first participant. The second participant is configured to transmit a response message to the first participant at the beginning of a time frame of a second frame structure. The response message comprises information associated with the receiving time. The first participant is configured to receive the response message at a response time. The first participant is configured to determine a time delay based on the response time and the information comprised in the response message. The first participant is configured to transmit a feedback message to the second participant, wherein the feedback message comprises information associated with the time delay determined.

Generally, the aspects and advantages mentioned above with regard to the method also apply to the communication network in a similar manner.

The communication network is enabled to perform the method described above, particularly the respective steps mentioned (individually).

In fact, a participant within its time system (Time A) sends a message at a certain time, e.g. 12.00.

Another participant within its time system (Time B) receives the message later, namely at 12.00, plus a time delay, for instance 80 ms. The another participant responds within its time system (Time B) to the participant within a time frame associated with its frame structure, particularly derived from its time system (Time B), the reception information at a response time, for instance at 12.01. In the response message the information associated with the time delay, e.g. 80 ms, is included. The participant receives within its time system (Time A) the response message, e.g. the information contained in the response message, at another time, for instance at 12.01 plus a time delay, e.g. 120 ms.

The participant processes the information contained in order to determine a relative delay, e.g. 120 ms - 80 ms = 40 ms. The participant can now adapt its time system (Time A) accordingly, e.g. by 20 ms, namely the half of the relative delay determined previously.

Further aspects and advantages of the claimed subject matter will become more readily appreciated as the same become better understood by reference to the following description when taken in conjunction with the accompanying drawings. In the drawings,

- Figure 1 schematically shows an overview of a communication network according to the invention,

- Figure 2 schematically shows an overview illustrating communication according to the state of the art and its disadvantages in case of failure as well as communication according to the invention,

- Figure 3 schematically shows an overview of the steps for initial synchronization achieved by a method of synchronizing participants of a communication network according to the invention, and

- Figure 4 schematically shows a synchronization of participants of a communication network during a regular operation and after an initial synchronization.

The detailed description set forth below in connection with the appended drawings, where like numerals reference like elements, is intended as a description of various embodiments of the disclosed subject matter and is not intended to represent the only embodiments. Each embodiment described in this disclosure is provided merely as an example or illustration and should not be construed as preferred or advantageous over other embodiments. The illustrative examples provided herein are not intended to be exhaustive or to limit the claimed subject matter to the precise forms disclosed.

For the purposes of the present disclosure, the phrase "at least one of A, B, and C", for example, means (A), (B), (C), (A and B), (A and C), (B and C), or (A, B, and C), including all further possible permutations when more than three elements are listed. In other words, the term "at least one of A and B" generally means "A and/or B", namely "A" alone, "B" alone or "A and B".

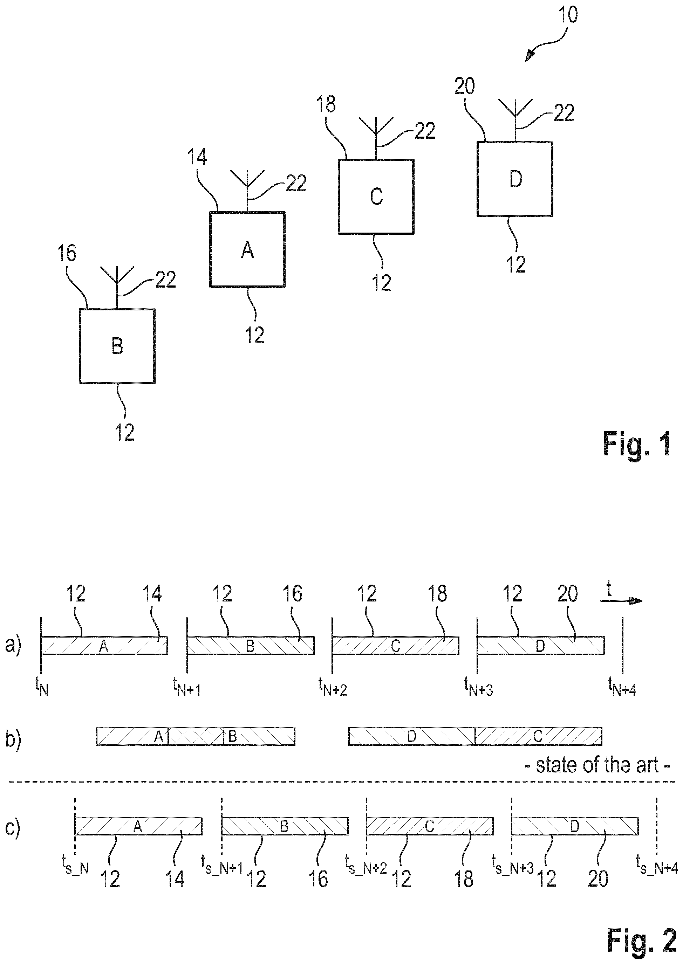

In Figure 1, a communication network 10 is shown that comprises several participants 12, namely a first participant 14, also labelled by "A", a second participant 16, also labelled by "B", a third participant 18, also labelled by "C", and a fourth participant 20, also labelled by "D".

All participants 12 are transceivers, e.g. radios, which communicate with each other over-the-air (OTA). For this purpose, the participants 12 have a respective antenna 22 that is configured to receive radio frequency signals over-the-air and to transmit radio frequency signals over-the-air.

In Figure 2, the communication of the participants 12 within the radio communication network 10 according to the state of the art is shown. The respective participants 12 are labelled by A-D.

The participants 12 all have a system time such that the communication is coordinated since each participant has its own time frame associated with a common frame structure. Hence, the participants 12 have dedicated transmission times for transmitting a signal, namely $t_N$ to $t_{N+3}$, which relate to four subsequent time frames. In the state of the art, this coordinated communication is achieved by using a global time obtained from a global time source, for instance obtained from a global navigation satellite system (GNSS) signal. Hence, all of the participants 12 relate to the same global time that is distributed in the communication network 10. In other words, the respective transmission times are derived from the global time that is used by all participants 12 in the state of the art.

In case the global time or rather the global time source fails or is not available, the respective participants 12 are no longer able to communicate with each other in the coordinated manner, as illustrated in Figure 2b).

As shown, the first participant ("A") may transmit too late, whereas the second participant ("B") may transmit too early, resulting in a collision of the transmissions. Furthermore, the order of the transmissions of the third participant ("C") and the fourth participant ("D") may be interchanged, causing problems with decoding the signals. Consequently, non-availability or failure of the global time (source) causes uncoordinated access of the transmission channel by the respective participants, resulting in interferences and collisions of the transmission as illustrated in Figure 2b), particularly compared with Figure 2a).

The communication network 10 according to the invention however ensures that a synchronized communication is obtained in a reliable manner, as indicated in Figure 2c). The communication within the communication network 10 according to the invention is based on a synchronization of the participants 12 directly communicating with each other. The synchronization ensures that the participants 12 directly communicating with each other are associated with a frame structure to which the participants 12 are synchronized. In other words, the participants 12 also have dedicated transmission times for transmitting a signal, namely $t_{s\_N}$ to $t_{s\_N+3}$, which relate to four subsequent time frames of the synchronized frame structure.

However, this synchronized frame structure is obtained without using a global time (source), as will be discussed later in more detail. Therefore, non-availability or failure of the global time (source) cannot have an impact on the communication.

When comparing the coordinated communication shown in Figure 2a) and the synchronized communication shown in Figure 2c), it becomes obvious that both communications are structured.

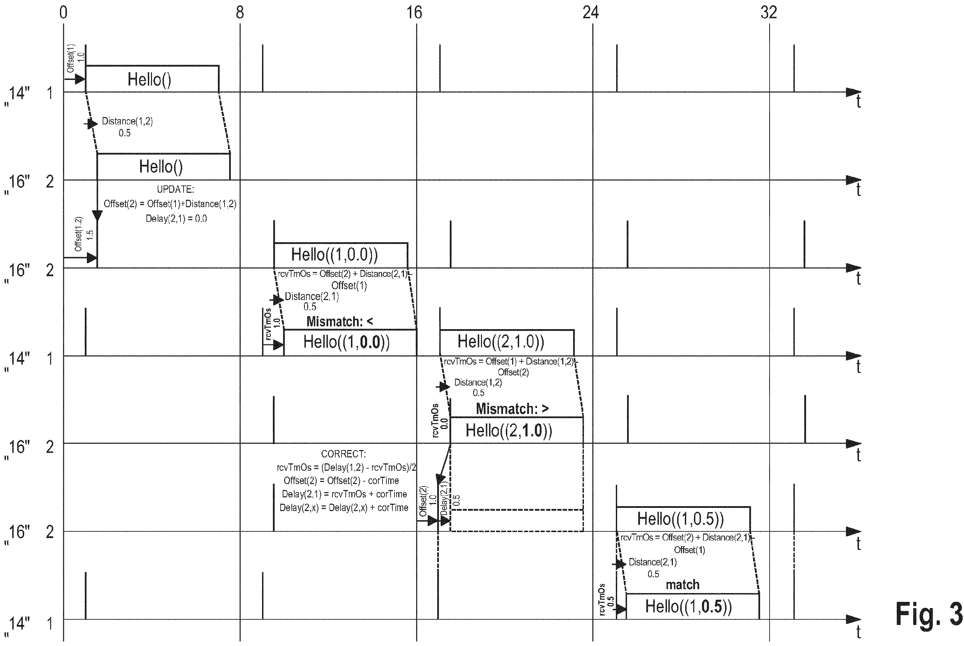

Hereinafter with reference to Figure 3, it is described how the (initial) synchronization of two participants 12 of the communication network 10 is achieved, namely the first participant 14 and the second participant 16.

As shown in Figure 3, the first participant 14 transmits a message at the beginning of a time frame of a first frame structure. The first participant 14 has an initial first system time such that the beginning of the time frame is derived from the initial first system time, which is shown by "Offset(1)" in Figure 3.

The message transmitted travels towards the second participant 16, namely along the Distance(1,2) causing an unknown real time delay that is associated with a runtime of the signal/message.

The second participant 16 receives the message at a receiving time that corresponds to the sum of the initial first system time of the first participant 14, which is unknown to the second participant 16, and the unknown real time delay (runtime of signal/message), namely "Offset(1)+Distance(1,2)".

In the shown example, the second participant 16 is a new participant in the communication network 10, which has not yet communicated with the first participant 14. Accordingly, the second participant 16 resets its initial system time, namely the initial second system time "Offset(2)", with respect to the receiving time, as illustrated by "Update: Offset(2) = Offset(1)+Distance(1 ,2)" in Figure 3.

Moreover, it is initially assumed that no real time delay occurs in the communication between the first participant 14 and the second participant 16, e.g. no runtime takes place. This is indicated in Figure 3 by "Delay(2,1) = 0.0" which corresponds to an initial time delay.

Afterwards, the second participant 16 transmits a response message to the first participant 14 at the beginning of a time frame of a second frame structure. As already indicated above, the time frame of the second frame structure is based on the initial second system time "Offset(2)" which was reset previously as described above.

The response message comprises information associated with the receiving time. In fact, the information associated with the receiving time relates to the initial time delay, namely the value of "Delay(2,1)", e.g. "0.0", as shown in Figure 3 since the response message addressed to the first participant 14 contains the value of the initial time delay.

Consequently, the response message inter alia comprises information of the participant 12 that shall receive the response message, namely the first participant 14 ("1"), as well as the information associated with the receiving time, e.g. the initial time delay ("0.0").

The first participant 14 receives the response message at a response time "rcvTmOs 1.0". The first participant 14 processes the response message received, e.g. the information comprised in the response message, in order to determine a time delay.

In fact, the initial time delay transmitted is verified whether it is true. In the present case, it is checked whether the first participant 14 receives the response message at a time that relates to a beginning of a time frame of the first frame structure plus the initial time delay. In other words, the first participant 14 verifies whether the delay submitted by the second participant 16 is valid or not.

Since the initial time delay was assumed to be zero, the first participant 14 should have received the response message at the beginning of the respective time frame.

This however is not true as indicated by "Mismatch: <" in Figure 3. Hence, the time delay submitted, namely the initial time delay, is deemed to be too small.

Actually, the first participant 14 determines that the response message was received with a time delay of "1.0" with respect to its system time, namely the initial first system time.

Since the response message was transmitted by the second participant 16 at the beginning of a respective time frame of the second frame structure in accordance with the (reset) initial second system time, the response time "rcvTmOs 1.0" equals "Offset(2) + Distance(2,1) - Offset(1)" due to the runtime of the response message, similar to "Distance(2,1)", and the initial first system time of the first participant 14 that receives the response message.

As indicated above, the time delay determined is "1.0" since the (unknown) runtime of the signal/message, which corresponds to "0.5", is considered twice so far. Actually, the response time "rcvTmOs 1.0" equals "Offset(2) + Distance(2,1) - Offset(1)", wherein the initial second system time "Offset(2)" of the second participant 16 was reset by the receiving time of the message sent initially. As also indicated above, the (reset) initial second system time "Offset(2)" corresponds to "Offset(1)+Distance(1,2)".

Consequently, the response time, at which the first participant 14 receives the response message, can be defined as follows:

$$\text{rcvTmOs } 1.0 \quad = \text{Offset}(2) + \text{Distance}(2,1) - \text{Offset}(1)$$

$$= [\text{Offset}(1)+\text{Distance}(1,2)] + \text{Distance}(2,1) - \text{Offset}(1)$$

$$= \text{Distance}(1,2) + \text{Distance}(2,1)$$

The time delay is determined by the difference of the response time "rcvTmOs 1.0" and the initial time delay, e.g. "0.0". In other words, the time delay is determined based on the response time and the information comprised in the response message.

Hence, the time delay determined corresponds to "Distance(2,1)" and "Distance(1,2)", namely the runtime of the signal/message in both directions.

Afterwards, the first participant 14 transmits - at the beginning of a time frame of the first frame structure derived from the initial first system time - a feedback message to the second participant 16. The feedback message comprises information associated with the time delay determined. In the shown embodiment, the time delay determined corresponds to "1.0".

The feedback message is received by the second participant 16 at a feedback time labelled by "rcvTmOs 0.0" in Figure 3, e.g. exactly at the beginning of the respective time frame of the second frame structure derived from the system time of the second participant 16. Hence, the second participant 16 determines a mismatch since the reception of the feedback message is associated with a time delay of 0.0, whereas the information comprises in the feedback message, namely the time delay determined, is associated with a time delay of 1.0. Accordingly, a mismatch is determined as labelled by "Mismatch: >" in Figure 3 since the time delay encompassed in the feedback message is higher than the real reception delay with regard to the time frame.

Finally, the second participant 16 adapts its system time based on the feedback message received, namely the information associated with the time delay determined, such that the system time of the second participant 16 corresponds to the initial first system time, namely the system time of the first participant 14. Accordingly, the participants 14, 16 are synchronized with each other.

Actually, a correction time "corTime" is determined based on the feedback message received at the feedback time. As illustrated in Figure 3, the correction time "corTime" is half of the difference of the time delay determined "Delay(1,2)" and the feedback time "rcvTmOs", namely:

$$corTime = (Delay(1,2) - rcvTmOs) / 2$$

Based on the correction time "corTime", the second system time "Offset(2)" of the second participant 16 is adapted, namely:

$$Offset(2) = Offset^*(2) - corTime,$$

wherein Offset*(2) relates to the former second system time, e.g. prior to its adaption.

Additionally, the time delay for the opposite direction, namely "Delay(2,1)", is also determined as follows:

$$Delay(2,1) = rcvTmOs + corTime$$

As discussed above, the time delay determined is taken into account when adapting the system time of the second participant 16.

Consequently, the second system time is adapted based on the feedback message received such that the system time of the second participant 16, namely the second system time, corresponds to the initial first system time, namely the system time of the first participant 14. This is illustrated in Figure 3 since Offset(2) and Offset(1) both relate to 1.0.

In addition, the second frame structure may also be adapted to the first frame structure based on the feedback message received.

Consequently, both participants 14, 16 may communicate with each other based on a common network time that equals the first system time and the second system time. In fact, the second participant 16 has adapted its system time to the one of the first participant 14 such that the initial first system time corresponds to the network time of the first participant 14 and the second participant 16, which is used for the communication between these participants 14, 16.

Thus, an initial synchronization between the first participant 14 and the second participant 16 which directly communicate with each other is achieved. This is also shown in Figure 3, as the second participant 16 transmits a message during regular operation, e.g. after the initial synchronization, wherein the message is transmitted at the beginning of a respective time frame associated with the network time used by the first participant 14 and the second participant 16 commonly. The message further comprises the information about the time delay, namely 0.5.

The first participant 14 receives this message exactly at the time indicated, namely with a real delay of 0.5 such that the time delay submitted matches the one determined by the first participant 14, as shown in Figure 3.

Generally, the communication between one-hop neighbors of the communication network 10 is synchronized in this manner. In a similar manner, the first participant 14 may also synchronize itself with the third participant 18 of the communication network 10 shown in Figure 1, as the third participant 18 is also a one-hop neighbor of the first participant 14. However, the second participant 16 may not synchronize itself with the third participant 18, as these participants 12 are not direct neighbors in the communication network 10 shown in Figure 1.

According to another example, the first participant 14 and the second participant 16 may synchronize themselves as discussed above, whereas the third participant 18 and the fourth participant 20 may also synchronize themselves.

All participants 12, namely the first participant 14 to the fourth participant 20, are part of the same communication network 10. Nevertheless, the communication between the first participant 14 and the second participant 16 may be different to the communication between the third participant 18 and the fourth participant 20, e.g. based on a different network time.

In other words, all participants 12 of the communication network 10 shown in Figure 1 may not be synchronized with respect to each other, but only direct communication partners. In other words, the network times used by the first pair of participants 12, namely the first participant 14 and the second participant 16, may be different to the network time of the second pair of participants 12, namely the third participant 18 and the fourth participant 20.

In other words, a global time is not distributed among the participants 12 within the communication network 10, as individual network times are used by the direct communication partners to which they synchronize themselves as discussed above. Put differently, the communication network 10 may comprise sub-networks having a network time. Direct communication participants 12 establish the respective sub-network.

In any case, the initial synchronization discussed above does not require that the initial system times of the participants 12 are synchronous prior to processing the information associated with the time delay determined. Actually, the system times of the participants 12 are synchronized by the respective steps in case the participants 12 communicate with each other directly.

The temporal information may be exchanged by messages like a blip, a hello message or a timing information contained in the message, e.g. as part of header information.

Generally, the participants 12, e.g. the first participant 14 and/or the second participant 16, may be stationary or mobile. Consequently, the distance between the first participant 14 and the second participant 16 may vary over time. The varying distance however is compensated by the method described above, which becomes obvious from the equations given.

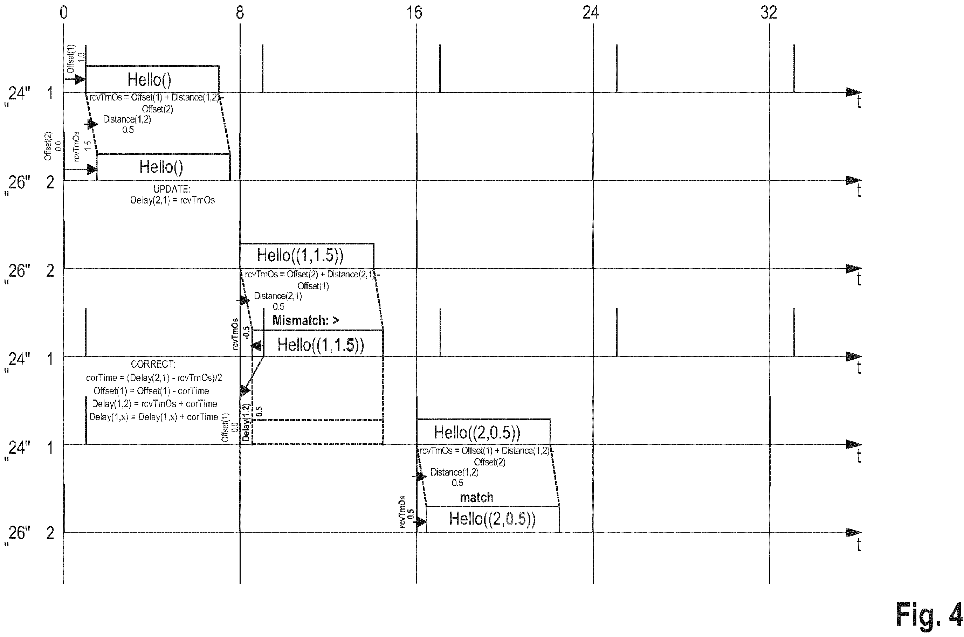

In Figure 4, a synchronization of participants 12 is shown that takes place during a regular operation of the communication network 10 and after an initial synchronization that was discussed previously with respect to Figure 3.

The synchronization shown in Figure 4 may be necessary in case of internal clock drifts or jitter of the participants 12 and/or a re-establishment of a communication that was not used for a long time. Hence, a former/initial synchronization of the participants 12 may not be valid anymore. For instance, one of the participants 12 may have left the communication network 10, but rejoined it later, resulting in an invalid synchronization with its former communication partner(s).

In the specific synchronization, a certain participant 24, for instance the first participant 14, transmits a message at the beginning of a time frame of its frame structure, e.g. the first frame structure.

The message is received by the other participant 26, for instance the second participant 16, with a temporal delay compared to the beginning of a time frame of its frame structure, e.g. the second frame structure.

The other participant 26, e.g. the second participant 16, determines the temporal delay as shown in Figure 4, namely "Update: delay (2,1) = rcvTmOs 1.5".

Afterwards, the other participant 26, e.g. the second participant 16, transmits a message comprising information associated with the temporal delay determined to the certain participant 24, e.g. the first participant 14. In other word, the respective message is addressed to the certain participant 24 as indicated by "1" in Figure 4.

The certain participant 24, e.g. the first participant 14, receives the message at a reception time "rcvTmOs -0.5", namely 0.5 earlier than expected due to the temporal delay encompassed in the message. In fact, the reception time can be defined by the respective system times of the participants 12 directly communicating with each other and the time delay caused by the distance, e.g. the runtime, as already discussed earlier:

$$rcvTmOs = Offset(2) + Distance(2,1) - Offset(1)$$

Since the reception time deviates from the expected one, a mismatch is determined, as indicated in Figure 4 by "Mismatch: >". In other words, the temporal delay encompassed in the message received is higher than the actual temporal delay, yielding a relative delay.

Consequently, the certain participant 24, e.g. the first participant 14, also determines a correction time "corTime" in a similar manner as discussed above, namely by

$$corTime = (Delay(2,1) - rcvTmOs) / 2$$

Based on the correction time "corTime", the first system time "Offset(1)" of the certain participant 24, e.g. first participant 14, is adapted, namely:

$$Offset(1) = Offset^*(1) - corTime,$$

wherein Offset*12) relates to the former system time of the certain participant 24, e.g. the former first system time, namely prior to its adaption.

Additionally, the time delay for the opposite direction, namely "Delay(1,2)", is also determined as follows:

$$Delay(1,2) = rcvTmOs + corTime$$

Accordingly, the certain participant 24, e.g. the first participant 14, adapts its system time based on the information associated with the temporal delay. Consequently, the participants 12 directly communicating with each other, namely the certain participant 24 and the other participant 26, are synchronized with each other again. Hence, the certain participant 24 and the other participant 26 have synchronized to a network time for their direct communication.

As already discussed above, the certain participant 24 may transmit a message during regular operation, e.g. after the (re-)synchronization, wherein the message is transmitted at the beginning of a respective time frame associated with the network time used by the certain participant 24 and the other participant 26 commonly. The message further comprises the information about the time delay, namely 0.5.

The other participant 26 receives the message exactly at the time indicated, namely with a real delay of 0.5 such that the time delay submitted matches the one determined by the other participant 26, yielding a match as shown in Figure 4. The match indicates the proper synchronization of the participants 12.

Accordingly, an initial synchronization as well as a synchronization afterwards, e.g. due to loss of synchronization (internal clock drifts, jitter, long pause of communication), may be taken into account. This ensures that participants 12 may enter and leave the communication network 10 since it is guaranteed that a participant 12 entering the communication network 10 can be synchronized irrespective thereof it is a new participant 12 in the communication network 10 or a participant 12 that left the communication network 10 previously.

Therefore, join- and/or leave-scenario(s) of a single participant 12 as well as split- and/or merge-scenario(s) of several participants 12, e.g. participants 12 belonging to a sub-network, are considered appropriately.

Actually, the participants 12 belonging to a sub-network may leave the communication network 10, but they remain synchronized since they have internally synchronized irrespective of the specific communication network 10. Put differently, these participants 12 may enter a new communication network and are synchronized to each other from the beginning.

In fact, the participants 12 communicating with each other agree on a time pattern, namely the network time (optionally together with a frame structure), enabling a coordinated communication without interferences or collisions.

Generally, the respective frame structures of the participants 12 may relate to different kinds of frame structures, e.g. a Global Navigation Satellite System (GNSS) frame structure and a different frame structure. These can be adapted to each other during the initial synchronization if wanted.

Accordingly, a method as well as a communication network 10 are described which ensure robust communication among the participants 12, even though no global time (source) or a time master is used. In fact, a direct synchronization between the participants 12 is achieved; at least in a pairwise manner, namely between the participants 12 that communicate with each other directly.

Consequently, it is not necessary that a centralized network time for the entire communication network 10 exists that has to be distributed among the participants 12 such that all participants 12 relate to the same centralized network time. In contrast, it is possible that several different communication pairs exist within the communication network 10 which have different (individual) network times, but the communication partners, namely the participants 12 communicating with each other, have the same network time after the initial synchronization. In case of an ongoing communication, a synchronization may take place in order to ensure that internal clock drifts and deviations due to a pause within the communication are compensated effectively.

Moreover, it is not necessary to know the respective locations or positions of the participants 12 for compensating runtimes of the signals/messages, as the synchronization performed takes a global time delay into account which comprises temporal information about external time delays like the runtimes and internal time delays due to jitter and/or clock drifts.

Certain embodiments disclosed herein, particularly the respective module(s) and/or unit(s), utilize circuitry (e.g., one or more circuits) in order to implement standards, protocols, methodologies or technologies disclosed herein, operably couple two or more components, generate information, process information, analyze information, generate signals, encode/decode signals, convert signals, transmit and/or receive signals, control other devices, etc. Circuitry of any type can be used.

In an embodiment, circuitry includes, among other things, one or more computing devices such as a processor (e.g., a microprocessor), a central processing unit (CPU), a digital signal processor (DSP), an application-specific integrated circuit (ASIC), a field-programmable gate array (FPGA), a system on a chip (SoC), or the like, or any combinations thereof, and can include discrete digital or analog circuit elements or electronics, or combinations thereof.

In an embodiment, circuitry includes hardware circuit implementations (e.g., implementations in analog circuitry, implementations in digital circuitry, and the like, and combinations thereof).

In an embodiment, circuitry includes combinations of circuits and computer program products having software or firmware instructions stored on one or more computer readable memories that work together to cause a device to perform one or more protocols, methodologies or technologies described herein. In an embodiment, circuitry includes circuits, such as, for example, microprocessors or portions of microprocessor, that require software, firmware, and the like for operation. In an embodiment, circuitry includes one or more processors or portions thereof and accompanying software, firmware, hardware, and the like.

The present application may reference quantities and numbers. Unless specifically stated, such quantities and numbers are not to be considered restrictive, but exemplary of the possible quantities or numbers associated with the present application. Also in this regard, the present application may use the term "plurality" to reference a quantity or number. In this regard, the term "plurality" is meant to be any number that is more than one, for example, two, three, four, five, etc. The terms "about", "approximately", "near" etc., mean plus or minus 5% of the stated value.

## Claims

1. A method of synchronizing participants (12) of a communication network (10) without using a global time source, wherein the communication network (10) comprises a first participant (14) having an initial first system time, wherein the communication network (10) further comprises a second participant (16) having an initial second system time, wherein the method comprises the steps of:

   - Transmitting, by the first participant (14), a message at the beginning of a time frame of a first frame structure,
   - Receiving at a receiving time, by the second participant (16), the message transmitted by the first participant (14),
   - Transmitting, by the second participant (16), a response message to the first participant (14) at the beginning of a time frame of a second frame structure, wherein the response message comprises information associated with the receiving time,
   - Receiving, by the first participant (14), the response message at a response time,
   - Determining, by the first participant (14), a time delay based on the response time and the information comprised in the response message, and
   - Transmitting, by the first participant (14), a feedback message to the second participant (16), wherein the feedback message comprises information associated with the time delay determined.

2. The method according to claim 1, wherein, in case the second participant (16) is a new participant in the communication network (10), the second participant (16) resets the initial second system time with respect to the receiving time, thereby initially assuming that no time delay occurs in the communication between the first participant (14) and the second participant (16).

3. The method according to claim 1 or 2, wherein the second participant (16) adapts its system time based on the feedback message received such that the system time of the second participant (16) corresponds to the initial first system time.

4. The method according to claim 3, wherein the time delay determined is taken into account when adapting the system time of the second participant (16).

5. The method according to any one of the preceding claims, wherein a correction time is determined based on the feedback message received at a feedback time, and wherein the correction time is half of the difference of the time delay determined and the feedback time, in particular wherein the system time of the second participant (16) is adapted based on the correction time.

6. The method according to any one of the preceding claims, wherein the message corresponds to a blip, a hello message or a timing information.

7. The method according to any one of the preceding claims, wherein the initial system times of the participants (12) are not synchronous prior to processing the information associated with the time delay determined.

8. The method according to any one of the preceding claims, wherein, during a regular operation and after an initial synchronization, a certain participant (24) transmits a message that is received by the other participant with a temporal delay, wherein the other participant (26) determines the temporal delay, wherein the other participant (26) transmits a message comprising information associated with the temporal delay, and wherein the certain participant (24) receives the message and adapts its system time based on the information associated with the temporal delay.

9. The method according to any one of the preceding claims, wherein the initial first system time and the initial second system time differ from each other and/or wherein the first frame structure and the second frame structure differ from each other.

10. The method according to any one of the preceding claims, wherein the second frame structure is adapted to the first frame structure based on the feedback message received.

11. The method according to any one of the preceding claims, wherein the communication network (10) comprises more than two participants (12), in particular wherein only the communication between 1-hop neighbors of the communication network (10) is synchronized.

12. The method according to any one of the preceding claims, wherein a global time is not distributed among the participants (12) within the communication network (10).

13. The method according to any one of the preceding claims, wherein the respective frame structures of the participants (12) relate to different kinds of frame structures, particularly a Global Navigation Satellite System (GNSS) frame structure and a different frame structure.

14. The method according to any one of the preceding claims, wherein an initialization phase is initiated during which the first participant (14) transmits the message at the beginning of the time frame in a periodic manner in order to receive the response message.

15. A communication network (10) without global time source, wherein the communication network (10) comprises a first participant (14) having an initial first system time, wherein the communication network (10) further comprises a second participant (16) having an initial second system time,

wherein the first participant (14) is configured to transmit a message at the beginning of a time frame of a first frame structure,
wherein the second participant (16) is configured to receive at a receiving time the message transmitted by the first participant,
wherein the second participant (16) is configured to transmit a response message to the first participant (14) at the beginning of a time frame of a second frame structure, wherein the response message comprises information associated with the receiving time,
wherein the first participant (14) is configured to receive the response message at a response time,
wherein the first participant (14) is configured to determine a time delay based on the response time and the information comprised in the response message, and
wherein the first participant (14) is configured to transmit a feedback message to the second participant (16), wherein the feedback message comprises information associated with the time delay determined.

Fig. 1

- state of the art -

Fig. 2

Fig. 3

Fig. 4

## EUROPEAN SEARCH REPORT

| | Application Number |
| | EP 23 20 3850 |

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2007/140127 A1 (FREI RANDALL W [US]) 21 June 2007 (2007-06-21) * paragraphs [0007] - [0008] * * paragraphs [0022] - [0038] * * figures 1,3,4 * | 1-15 | INV. H04W56/00 |
| X | US 2020/295901 A1 (PANG ZHIBO [SE] ET AL) 17 September 2020 (2020-09-17) * paragraphs [0017] - [0019] * * paragraphs [0097] - [0100] * | 1-15 | |
| A | KR 102 230 670 B1 (HANWHA SYSTEMS CO LTD [KR]) 22 March 2021 (2021-03-22) * paragraphs [0060] - [0087] * | 1-15 | |
| A | MINHWAN CHEON ET AL: "Dynamic relay node selection scheme for multi-hop time synchronization in Link-16", MILCOM 2015 - 2015 IEEE MILITARY COMMUNICATIONS CONFERENCE, IEEE, 26 October 2015 (2015-10-26), pages 1329-1334, XP032831053, DOI: 10.1109/MILCOM.2015.7357629 [retrieved on 2015-12-14] * the whole document * | 1-15 | TECHNICAL FIELDS SEARCHED (IPC) H04W H04J |
| A | CN 111 885 694 A (10TH RESEARCH INST CHINA ELECTRONICS TECH GROUP CORP) 3 November 2020 (2020-11-03) * the whole document * | 1-15 | |

The present search report has been drawn up for all claims

| Place of search | Date of completion of the search | Examiner |
|---|---|---|
| The Hague | 27 March 2024 | Dejonghe, Olivier |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 20 3850

This annex lists the patent family members relating to the patent documents cited in the above-mentioned European search report.
The members are as contained in the European Patent Office EDP file on
The European Patent Office is in no way liable for these particulars which are merely given for the purpose of information.

27-03-2024

| Patent document cited in search report | | | Publication date | Patent family member(s) | | | Publication date |
|---|---|---|---|---|---|---|---|
| US 2007140127 | A1 | | 21-06-2007 | CA | 2632977 | A1 | 28-06-2007 |
| | | | | EP | 1964296 | A1 | 03-09-2008 |
| | | | | EP | 2323291 | A1 | 18-05-2011 |
| | | | | JP | 2009520401 | A | 21-05-2009 |
| | | | | US | 2007140127 | A1 | 21-06-2007 |
| | | | | US | 2011058494 | A1 | 10-03-2011 |
| | | | | WO | 2007073465 | A1 | 28-06-2007 |
| US 2020295901 | A1 | | 17-09-2020 | CN | 111698666 | A | 22-09-2020 |
| | | | | EP | 3709726 | A1 | 16-09-2020 |
| | | | | US | 2020295901 | A1 | 17-09-2020 |
| KR 102230670 | B1 | | 22-03-2021 | NONE | | | |
| CN 111885694 | A | | 03-11-2020 | NONE | | | |

EPO FORM P0459

For more details about this annex : see Official Journal of the European Patent Office, No. 12/82